# EUROPEAN PATENT APPLICATION

(11) **EP 4 707 084 A1**
(43) Date of publication of application: **11.03.2026**
(21) Application number: 25197702.1
(22) Date of filing: 22.08.2025
(51) Int. Cl.: B60T 8/1755

(54) **BRAKING SYSTEM FOR ELECTRIC VEHICLE, CONTROL METHOD, AND ELECTRIC VEHICLE**

(30) Priority: 23.08.2024 CN 202411169783
(71) Applicant: Huawei Digital Power Technologies Co., Ltd., Shenzhen, Guangdong 518043 (CN)
(72) Inventor: ZENG, Dehua, Shenzhen, 518043 (CN); TANG, Jiayu, Shenzhen, 518043 (CN); HUANG, Chongxi, Shenzhen, 518043 (CN); NI, Hui, Shenzhen, 518043 (CN)
(74) Representative: Gill Jennings & Every LLP

(57) **Abstract**

A braking system for an electric vehicle for automatic drifting, a control method, and the electric vehicle relate to the field of new energy vehicles, and may be applied to a pure electric vehicle and a hybrid electric vehicle. The braking system includes a central controller and a plurality of wheel end braking apparatuses. Each wheel end braking apparatus is configured to output braking force to a brake disc of one wheel to brake the electric vehicle. The central controller is configured to: in a traveling process in which a vehicle speed of the electric vehicle is greater than a vehicle speed threshold, when an opening of an accelerator pedal of the electric vehicle is less than an accelerator threshold, an opening of a brake pedal of the electric vehicle is less than a braking threshold, a rotation angle of a steering wheel of the electric vehicle is greater than an angle threshold, and a steering angle of the electric vehicle is less than a drifting threshold, control wheel end braking apparatuses corresponding to rear wheels of the electric vehicle to output braking force. According to this solution, drifting can be implemented through only a simple operation, to reduce a drifting operation threshold and improve driving experience of the vehicle.

## Description

### TECHNICAL FIELD

This application relates to the field of new energy vehicles, and more specifically, to a braking system for an electric vehicle for automatic drifting, a braking control method, and an electric vehicle.

### BACKGROUND

Vehicle drifting is a vehicle driving technique, and is usually used in racing or performances. Drifting means that some tires of a vehicle lose grip and a vehicle body steers at a large sideslip angle. A driver can perform drifting by operating a drive, a brake, and a steering wheel, to implement a small-radius turn, so as to meet requirements for racing, driving fun, and steering in a narrow area.

However, drifting through operations of the driver requires the driver to master driving skills, and is difficult for a common driver to implement. In an existing vehicle drifting assistance technology, a horizontal posture is controlled by controlling an angle of a steering wheel, and in this case, steering wheel kickback occurs, resulting in poor driver experience.

Therefore, how to reduce a requirement of a drifting operation for a driver is a problem that needs to be resolved.

### SUMMARY

This application provides a braking system for an electric vehicle for automatic drifting, a control method, and the electric vehicle. In a drifting cornering process of the electric vehicle, no complex operation is required, and swerving is implemented through control of the braking system, to reduce a drifting operation threshold for a driver and improve driving experience of the vehicle.

According to a first aspect, this application provides a braking system for an electric vehicle. The braking system includes a central controller and a plurality of wheel end braking apparatuses. The plurality of wheel end braking apparatuses are in a one-to-one correspondence with a plurality of wheels of the electric vehicle, and the plurality of wheels include front wheels and rear wheels. Each wheel end braking apparatus is configured to output braking force to a brake disc of one wheel to brake the electric vehicle.

The central controller is configured to: in a traveling process in which a vehicle speed of the electric vehicle is greater than a vehicle speed threshold, when an opening of an accelerator pedal of the electric vehicle is less than an accelerator threshold, an opening of a brake pedal of the electric vehicle is less than a braking threshold, a rotation angle of a steering wheel of the electric vehicle is greater than an angle threshold, and a steering angle of the electric vehicle is less than a drifting threshold, control wheel end braking apparatuses corresponding to the rear wheels of the electric vehicle to output braking force.

The braking system may be an electromechanical brake system. The braking system includes the central controller and the plurality of wheel end braking apparatuses separately connected to the central controller. The wheel end braking apparatus is located at each wheel and is configured to output clamping force to the brake disc of the wheel, so that the electric vehicle generates braking force. The central controller may indicate braking force that needs to be output by the plurality of wheel end braking apparatuses, and each wheel end braking apparatus may output braking force of different magnitudes, or may output braking force of the same magnitude. In this application, the wheel end braking apparatuses corresponding to the rear wheels may be understood as wheel end braking apparatuses mounted on the rear wheels, and may apply the braking force to the rear wheels. Similar descriptions may be understood similarly, and details are not described below again.

Drifting is a special driving skill for a vehicle. When the vehicle turns, rear wheels lose friction grip on a road surface or significantly reduce friction grip on a road surface, so that the vehicle oversteers, a rear part of the vehicle slides outward, and the vehicle slides to corner. This process needs a driver to have a high skill, and a sensitive control capability to vehicle dynamics through coordinated operations on a steering wheel, an accelerator, and a brake, resulting in high requirements. The braking system according to this application may be configured to implement automatic drifting. The automatic drifting in this application means that the driver can perform a simple operation, to make the electric vehicle complete a drifting cornering operation by the electric vehicle by using an algorithm.

During the automatic drifting of the electric vehicle, the central controller determines whether to enter a drifting control state based on information such as a pedal stroke, a steering wheel angle, and a vehicle body position. When the opening of the accelerator pedal is less than the accelerator threshold, the opening of the brake pedal is less than the braking threshold, and the rotation angle of the steering wheel is greater than the angle threshold, in other words, the driver does not step down the accelerator pedal and the brake pedal or a stepping amplitude is less than a specified range, and the driver rotates the steering wheel to a side to which the vehicle needs to turn, it may be considered that the driver expects to perform a drifting operation. If the steering angle of the electric vehicle is less than the drifting threshold, the central controller may enter the drifting control state, and control the braking force output by the wheel end braking apparatuses corresponding to the two rear wheels to increase, to reduce grip of the rear wheels, so that the steering angle of the vehicle increases, and the vehicle implements the automatic drifting.

It should be understood that the electric vehicle is in an automatic drifting mode when drifting, and the automatic drifting mode may be entered through an operation of the driver. The central controller enters automatic drifting control only when the electric vehicle is in the automatic drifting mode, and conditions that the central controller detects that the opening of the accelerator pedal is less than the accelerator threshold, the opening of the brake pedal is less than the braking threshold, the rotation angle of the steering wheel is greater than the angle threshold, and the steering angle of the electric vehicle is less than the drifting threshold are all met. Therefore, that the electric vehicle is in the automatic drifting mode does not mean that the central controller is performing automatic drifting control, but that the central controller is in automatic drifting control means that the electric vehicle needs to be in the automatic drifting mode. When the central controller performs automatic drifting control, the driver only needs to operate the steering wheel, where the driver controls a drifting angle of the vehicle via the steering wheel.

According to the solution of this application, in a drifting cornering process, the drifting operation of the electric vehicle can be implemented after the driver performs only a simple operation, to reduce a drifting operation threshold for the driver, and improve driving experience of the vehicle.

With reference to the first aspect, in some implementations of the first aspect, that the central controller is configured to control the wheel end braking apparatuses corresponding to the rear wheels of the electric vehicle to output the braking force specifically includes: The central controller is configured to control the braking force output by the wheel end braking apparatuses corresponding to the rear wheels to increase, so that the braking force output by the wheel end braking apparatuses corresponding to the rear wheels is greater than braking force indicated by the opening of the brake pedal.

The opening of the brake pedal may indicate a magnitude of braking force required by the driver. A larger opening of the brake pedal indicates a higher or more urgent requirement of the driver for braking, and larger corresponding required braking force. When the central controller is not in automatic drifting control, the central controller may determine, based on the opening of the brake pedal, the braking force that needs to be output by each wheel end braking apparatus, and separately indicate the braking force to each wheel end braking apparatus. A greater opening of the brake pedal indicates greater braking force output by each wheel end braking apparatus. The braking force indicated by the central controller changes with the opening of the brake pedal.

In a process in which the central controller controls the electric vehicle to automatically drift to one side, that is, the central controller is in automatic drifting control, the braking force indicated by the central controller is not determined based on the opening of the brake pedal. The braking force indicated by the central controller does not change with the opening of the brake pedal. Because the opening of the brake pedal is less than the braking threshold, the opening of the brake pedal may remain unchanged. The braking force output by the wheel end braking apparatuses corresponding to the rear wheels is indicated by the central controller. Therefore, in this case, the braking force output by the wheel end braking apparatuses corresponding to the rear wheels is not equal to the braking force indicated by the opening of the brake pedal. Generally, the braking force output by the wheel end braking apparatuses corresponding to the rear wheels is greater than the braking force indicated by the opening of the brake pedal.

According to the solution of this application, the central controller determines, according to the algorithm, the braking force output to the rear wheels during drifting, instead of determining the braking force based on the opening of the brake pedal. Therefore, a drifting operation threshold for the driver is reduced, control accuracy and a control speed are improved, and drifting safety and efficiency are improved.

With reference to the first aspect, in some implementations of the first aspect, the central controller is further configured to: in a process of controlling the wheel end braking apparatuses corresponding to the rear wheels to output the braking force, when the steering angle of the electric vehicle increases to be greater than or equal to the drifting threshold, control wheel end braking apparatuses corresponding to wheels on a side opposite to a steering direction of the electric vehicle to output braking force.

In the process in which the central controller controls the electric vehicle to automatically drift to one side, the braking force output by the wheel end braking apparatuses corresponding to the rear wheels is controlled to increase, to reduce the grip of the rear wheels, so that the steering angle of the vehicle increases. When the vehicle is in a non-steady state in a drifting process or when the drifting ends, for example, a required drifting angle or drifting position is reached, the central controller is configured to control the wheel end braking apparatuses corresponding to the wheels on the side opposite to the steering direction of the electric vehicle to output the braking force. By applying the braking force to outer wheels, a vehicle body posture can be quickly restored to a steady state, to improve stability and safety of the vehicle. In this way, an operation of the driver is simpler and safer.

The central controller uses an electronic stability program (electronic stability program, ESP) to control the wheel end braking apparatuses corresponding to the wheels on the side opposite to the steering direction of the electric vehicle to output the braking force. The electronic stability program is a general term for a system or program that effectively prevents, while improving vehicle control performance, the vehicle from being out of control when the vehicle reaches a dynamic limit of the vehicle. The ESP can analyze traveling status information of the vehicle that is transmitted from sensors, to help the vehicle maintain dynamic balance, and is configured to correct oversteer or understeer of the vehicle. A control program of the electronic stability program can be implemented through the central controller.

In the drifting process, the vehicle needs to appropriately oversteer. If the ESP is enabled, it is possible that a drifting action cannot be completed. Therefore, in the process in which the central controller controls the electric vehicle to automatically drift to one side, the ESP needs to be disabled or does not participate in control of the braking system.

However, when the steering angle of the electric vehicle increases to a specified drifting threshold, the electric vehicle may complete the drifting process or lose stability in the drifting process. In this case, the central controller may exit automatic drifting control, and normally respond to a change of the opening of the brake pedal. After the central controller exits automatic drifting control, the ESP is enabled again and participates in vehicle control. When the electric vehicle oversteers, the braking force is applied to the outer wheels for steering, so that the vehicle body posture can be quickly restored to stability and the oversteer can be corrected.

According to the solution of this application, the braking force is applied to the outer wheels, so that the vehicle body posture can be quickly restored to the steady state, to improve stability and safety of the vehicle. In this way, an operation of the driver is simpler and safer.

With reference to the first aspect, in some implementations of the first aspect, the central controller is further configured to: in a process of controlling the wheel end braking apparatuses corresponding to the rear wheels to output the braking force, when the opening of the brake pedal or the opening of the accelerator pedal increases, or when the rotation angle of the steering wheel is less than or equal to the angle threshold, control the plurality of wheel end braking apparatuses to output the braking force indicated by the opening of the brake pedal.

In the process in which the central controller controls the electric vehicle to automatically drift to one side, the driver may also end the automatic drifting in advance through an operation. For example, the driver may end the automatic drifting by stepping down the accelerator pedal, or the driver may end the automatic drifting by stepping down the brake pedal, or the driver may end the automatic drifting by rotating the steering wheel in a reverse direction. Therefore, when the central controller detects that any one or more of the following conditions are met: the opening of the brake pedal changes, the opening of the accelerator pedal changes, and the rotation angle of the steering wheel is less than or equal to the angle threshold, the central controller may end automatic drifting control, determine braking force again in response to an opening change of the brake pedal, and indicate the braking force to each wheel end braking apparatus.

According to the solution of this application, the driver may flexibly control the end of the automatic drifting. This improves security of the automatic drifting, reduces the drifting operation threshold for the driver, and improves driving experience of the vehicle.

In some possible implementations, the electric vehicle includes a drifting button. When the drifting button is off, the central controller is configured to control the wheel end braking apparatuses to output the braking force indicated by the opening of the brake pedal. When the drifting button is on, the central controller is configured to control the braking force output by the wheel end braking apparatuses corresponding to the rear wheels to be unequal to the braking force indicated by the opening of the brake pedal.

The drifting button may be disposed on the electric vehicle for the driver to perform an operation. For example, the drifting button may be a physical button, and the driver may press the physical button to enable the automatic drifting mode of the electric vehicle, so that the central controller starts automatic drifting control when detecting that the vehicle meets the conditions. For another example, the drifting button may be a virtual button on a central control screen, and the driver may select the automatic drifting mode to enable the automatic drifting mode of the electric vehicle. For another example, the drifting button may alternatively be indirectly disposed, for example, the drifting button may be combined with a button in a motion mode, or when the driver disables an ESP function button, the automatic drifting mode of the electric vehicle is enabled by default. A setting and a form of the drifting button are not limited in this application.

When the drifting button is on, the electric vehicle enters the automatic drifting mode, the ESP is disabled, and the central controller performs automatic drifting control when an input condition is met. The braking force output by the wheel end braking apparatuses corresponding to the two rear wheels is unequal to the braking force indicated by the opening of the brake pedal. When the drifting button is off, the ESP is normally enabled, and the central controller performs braking control based on the opening of the brake pedal.

According to the solution of this application, a switch for setting the automatic drifting is set by the driver, to improve driving experience of the driver.

With reference to the first aspect, in some implementations of the first aspect, the central controller is configured to: in a process of controlling the wheel end braking apparatuses corresponding to the rear wheels to output the braking force, when the vehicle speed of the electric vehicle is less than or equal to the vehicle speed threshold, control the plurality of wheel end braking apparatuses to output the braking force indicated by the opening of the brake pedal.

In a process of controlling the electric vehicle to automatically drift to one side, a speed of the electric vehicle is greater than or equal to the vehicle speed threshold. The electric vehicle needs to have a specific speed to perform the automatic drifting. The vehicle speed threshold is set to prevent the electric vehicle from triggering automatic drifting control of the central controller in a static state when the automatic drifting mode is enabled.

The speed of the electric vehicle may be calculated by the central controller, or may be obtained by a vehicle controller by using a positioning system and sent to the central controller. An obtaining manner of the vehicle speed is not specifically limited in this application.

With reference to the first aspect, in some implementations of the first aspect, that the central controller is configured to control the wheel end braking apparatuses corresponding to the rear wheels to output the braking force includes: The central controller is configured to control the braking force output by the wheel end braking apparatuses corresponding to the rear wheels to linearly increase to a target value at a preset change rate.

A manner in which the wheel end braking apparatuses increases the braking force output to the rear wheels can also be indicated and controlled by the central controller. The change rate of braking force increase may be preset or may be calculated in real time. The preset change rate may be set to a larger value, so that the wheel end braking apparatuses may increase the braking force output to the rear wheels in a stepped manner. The preset change rate may alternatively be a set fixed value, so that the braking force increases to the target value at a fixed slope. The preset change rate may alternatively be variable, and the braking force is adjusted according to a policy.

The central controller can also control the output braking force in a closed-loop manner, and adjust the target value or a control range of the braking force by detecting a slip ratio of the rear wheel. External characteristics of the braking force output by the wheel end braking apparatuses to the rear wheels can fluctuate back and forth within a control range.

According to the solution of this application, the central controller adjusts and controls the braking force in real time in an automatic drifting process, so that a vehicle body drifting posture can be effectively controlled, an operation requirement of the driver is reduced, and driving experience is improved.

With reference to the first aspect, in some implementations of the first aspect, the target value increases with an increase of the rotation angle of the steering wheel; or the target value increases with an increase of an attachment coefficient of a road surface in contact with the rear wheels; or the target value increases with an increase of load of the rear wheels.

The target value of the braking force output to the rear wheels directly affects the drifting angle and vehicle body control. When an angle at which the driver controls the steering wheel increases, it indicates that a larger angle of drifting is required, and therefore larger braking force needs to be output to the rear wheels. When the attachment coefficient of the road surface or the load of the rear wheels increases, friction between the rear wheels and the ground is greater. Therefore, to lose or reduce the friction between the rear wheels and the road surface, greater braking force needs to be applied to the rear wheels. On a road surface with a high or low attachment coefficient, the electric vehicle needs different parameters to adapt the automatic drifting, and magnitudes of braking force applied to a wheel end are different.

According to the solution of this application, different drifting parameters are adjusted based on the rotation angle of the steering wheel and statuses of the road surface and the vehicle body, to better implement the automatic drifting, and improve drifting efficiency and safety.

With reference to the first aspect, in some implementations of the first aspect, the drifting threshold increases with an increase of the rotation angle of the steering wheel; or the drifting threshold is a fixed value.

The drifting angle of the vehicle may be set to a fixed value by the driver. For example, the driver manually enters the drifting angle before the automatic drifting starts. The drifting angle may alternatively be calculated by using the steering wheel angle. For example, a correspondence may be established between the steering wheel angle and a drifting angle that the driver expects to obtain in the algorithm of the central controller. A larger rotation angle of the steering wheel indicates a larger target drifting angle that needs to be completed, and a smaller rotation angle of the steering wheel indicates a smaller drifting angle that needs to be completed. The drifting angle of the vehicle may alternatively be calculated by using information such as the opening of the brake pedal.

According to the solution of this application, the drifting is implemented through the control of the braking system, where the drifting of the vehicle can be implemented after the driver performs only a simple operation, to reduce a drifting operation threshold for the driver, and improve driving experience of the vehicle.

According to a second aspect, this application provides a braking control method for an electric vehicle. The electric vehicle includes a braking system. The braking system is configured to output braking force to a plurality of wheels of the electric vehicle. The control method includes: In a traveling process in which a vehicle speed of the electric vehicle is greater than a vehicle speed threshold, when an opening of an accelerator pedal of the electric vehicle is less than an accelerator threshold, an opening of a brake pedal of the electric vehicle is less than a braking threshold, a rotation angle of a steering wheel of the electric vehicle is greater than an angle threshold, and a steering angle of the electric vehicle is less than a drifting threshold, the braking system outputs braking force to rear wheels of the electric vehicle; and in a process in which the braking system outputs the braking force to the rear wheels, when the steering angle of the electric vehicle increases to be greater than or equal to the drifting threshold, the braking system outputs braking force to wheels on a side opposite to a steering direction of the electric vehicle.

With reference to the second aspect, in some implementations of the second aspect, the control method further includes: In a process in which the braking system is configured to output the braking force to the rear wheels of the electric vehicle, when the opening of the brake pedal or the opening of the accelerator pedal increases, or when the rotation angle of the steering wheel is less than or equal to the angle threshold, the braking system outputs braking force indicated by the opening of the brake pedal to the plurality of wheels.

With reference to the second aspect, in some implementations of the second aspect, that the braking system outputs the braking force to the rear wheels includes: linearly increasing the braking force output by the braking system to the rear wheels to a target value at a preset change rate, where the target value increases with an increase of the rotation angle of the steering wheel; or the target value increases with an increase of an attachment coefficient of a road surface in contact with the rear wheels; or the target value increases with an increase of load of the rear wheels.

With reference to the second aspect, in some implementations of the second aspect, the drifting threshold increases with an increase of the rotation angle of the steering wheel; or the drifting threshold is a fixed value.

According to a third aspect, this application provides an electric vehicle. The electric vehicle includes the braking system according to the first aspect and the implementations of the first aspect, a drive system, the accelerator pedal, the brake pedal, and the steering wheel, the accelerator pedal is configured to instruct the drive system to output driving force to the wheels of the electric vehicle, and the brake pedal is configured to instruct the braking system to output braking force to the plurality of wheels of the electric vehicle.

In a traveling process in which a vehicle speed of the electric vehicle is greater than a vehicle speed threshold, when an opening of the accelerator pedal is less than an accelerator threshold, an opening of the brake pedal is less than a braking threshold, a rotation angle of the steering wheel is greater than an angle threshold, and a steering angle of the electric vehicle is less than a drifting threshold, the braking system is configured to output braking force to the rear wheels of the electric vehicle.

With reference to the third aspect, in some implementations of the third aspect, the electric vehicle further includes an electronic stability control system, and the electronic stability control system is disabled in a process in which the braking system is configured to output the braking force to the rear wheels of the electric vehicle.

For beneficial effect of another aspect, refer to the beneficial effect described in the first aspect. Details are not described herein again.

### BRIEF DESCRIPTION OF DRAWINGS

FIG. 1 is a diagram of an electric vehicle according to an embodiment of this application;
FIG. 2 is a diagram of an architecture of a braking system for an electric vehicle according to an embodiment of this application;
FIG. 3 is a diagram of a wheel end braking apparatus according to an embodiment of this application;
FIG. 4 is a diagram of vehicle drifting according to an embodiment of this application;
FIG. 5 is a diagram of performing automatic drifting control by a braking system according to an embodiment of this application; and
FIG. 6 is a diagram of an automatic drifting process according to an embodiment of this application.

### DESCRIPTION OF EMBODIMENTS

The following describes technical solutions of this application with reference to the accompanying drawings. Detailed descriptions and the accompanying drawings of the following embodiments are used to describe principles of this application as examples, but cannot be used to limit the scope of this application. In other words, this application is not limited to the described embodiments.

Drifting is a movement focused on a particular driving technique. Vehicle drifting is to use oversteer to allow a vehicle to travel sideways to pass through a curve. The vehicle drifting is to produce lateral force and longitudinal force to tires through interaction between the tires and a road surface. When lateral force of a rear drive breaks through attachment of the road surface, the tire generates a lateral speed and slips, and wheels travel along a tangential direction of a vehicle body, which causes drifting. A driver can perform drifting by operating a drive, a brake, and a steering wheel, to implement a small-radius turn, so as to meet requirements for racing, driving fun, and steering in a narrow area. However, drifting through operations of the driver needs the driver to master driving skills, and is difficult for a common driver to implement.

In a possible implementation, automatic track drifting can be implemented by accurately controlling parts such as a steering system, a clutch, a separate wheel brake, and an accelerator.

It should be understood that, in an existing vehicle drifting assistance technology, a horizontal posture is controlled by controlling a rotation angle of the steering wheel, and in this case, steering wheel kickback occurs, resulting in poor driver experience. Moreover, an algorithm for implementing automatic drifting is complex, and control stability is low.

Based on the foregoing problems, this application provides a braking system for an electric vehicle for automatic drifting, a control method, and the electric vehicle. In a drifting cornering process of the electric vehicle, a driver only needs to perform a simple operation to implement swerving through control of the braking system, to implement drifting of the vehicle. This reduces a drifting operation threshold for the driver, improves driving experience of the vehicle, and improves control stability.

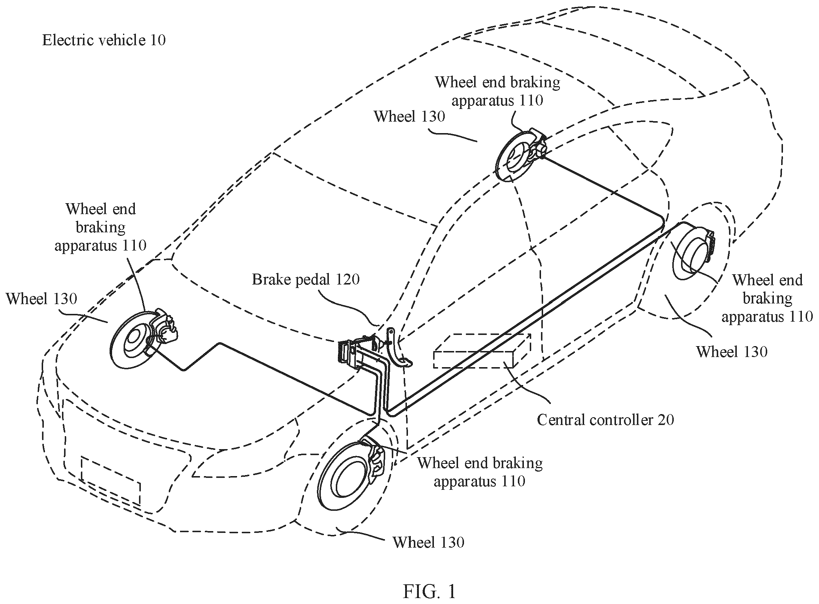

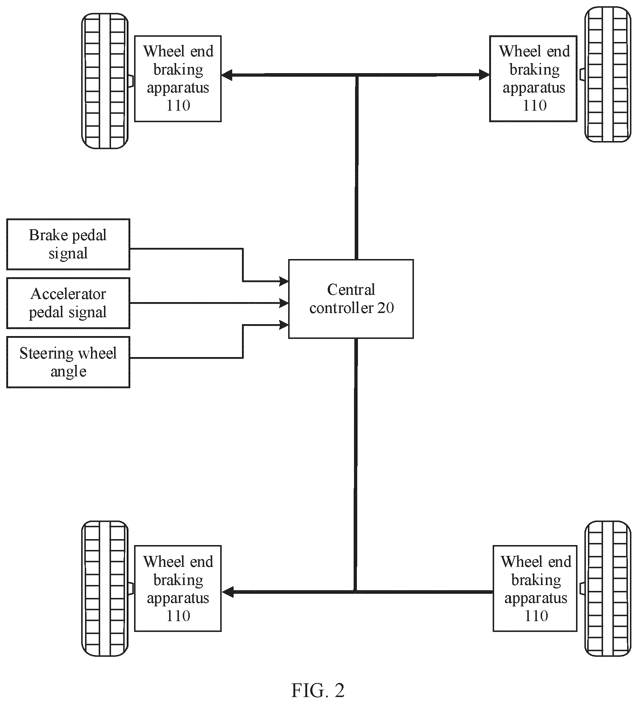

FIG. 1 and FIG. 2 are diagrams of architectures of an electric vehicle 10 according to an embodiment of this application. With reference to FIG. 1 and FIG. 2, the electric vehicle 10 includes a braking system and four wheels 130.

The braking system includes a central controller 20 and a plurality of wheel end braking apparatuses 110. The plurality of wheel end braking apparatuses are in a one-to-one correspondence with a plurality of wheels of the electric vehicle, and the plurality of wheels include front wheels and rear wheels. Each wheel end braking apparatus is configured to output braking force to a brake disc of one wheel to brake the electric vehicle 10.

The following uses an example in which the electric vehicle 10 includes four wheel end braking apparatuses 110 and four wheels 130 for description. It should be understood that a quantity of wheel end braking apparatuses and a quantity of wheels may be other quantities. Related descriptions are similar to those in which the four wheel end braking apparatuses are disposed, and details are not described below.

As shown in FIG. 1, the braking system includes the central controller 20 and the four wheel end braking apparatuses 110. The four wheels 130 include two front wheels and two rear wheels. The four wheel end braking apparatuses 110 are in a one-to-one correspondence with the four wheels 130, and each wheel end braking apparatus 110 is disposed at a corresponding wheel position. The electric vehicle 10 may further include a power battery (not shown in the figure) connected to an input end of the wheel end braking apparatus 110, and the power battery provides a current for the wheel end braking apparatus 110. Each wheel end braking apparatus 110 is configured to output braking force to a corresponding wheel 130 to brake the electric vehicle 10. The electric vehicle 10 further includes a vehicle controller and a drive system. The vehicle controller is configured to control the drive system to output driving force.

As shown in FIG. 2, the electric vehicle 10 further includes a brake pedal 120, an accelerator pedal, and a steering wheel. The driver may control a traveling status of the vehicle via the brake pedal 120, the accelerator pedal, and the steering wheel.

In an embodiment, the vehicle controller is signal-connected to the accelerator pedal. The vehicle controller calculates a vehicle torque requirement based on an opening of the accelerator pedal in a traveling process of the electric vehicle 10, and sends a torque signal to each of four motor controller based on the vehicle torque requirement. Each motor controller controls, based on an indication of the torque signal, a corresponding motor to output torque to drive a corresponding wheel. The central controller 20 may further obtain an accelerator pedal signal from the vehicle controller. The accelerator pedal signal indicates an opening of the accelerator pedal.

In another embodiment, the central controller 20 may alternatively be signal-connected to the accelerator pedal, and the central controller directly obtains an accelerator pedal signal from the accelerator pedal, where the accelerator pedal signal indicates an opening of the accelerator pedal.

In an embodiment, the central controller 20 is signal-connected to the brake pedal 120. The central controller 20 may be configured to determine braking force based on the opening of the brake pedal. In a traveling process of the driver, when the electric vehicle 10 needs to brake, the driver steps down the brake pedal. The central controller 20 receives a brake pedal signal from the brake pedal, and outputs a braking force distribution signal to the four wheel end braking apparatuses 110. The wheel end braking apparatus 110 is configured to: receive the braking force distribution signal and output clamping force to the brake disc according to an indication of the braking force distribution signal, to generate friction braking force, so that the electric vehicle 10 brakes.

In another embodiment, the vehicle controller is signal-connected to the brake pedal 120. The vehicle controller calculates a vehicle brake requirement based on an opening of the brake pedal in a traveling process of the electric vehicle 10, and sends a brake signal to the central controller 20 based on the vehicle brake requirement. The central controller 20 controls, based on an indication of the brake signal, a corresponding wheel end braking apparatus to output braking force to brake a corresponding wheel.

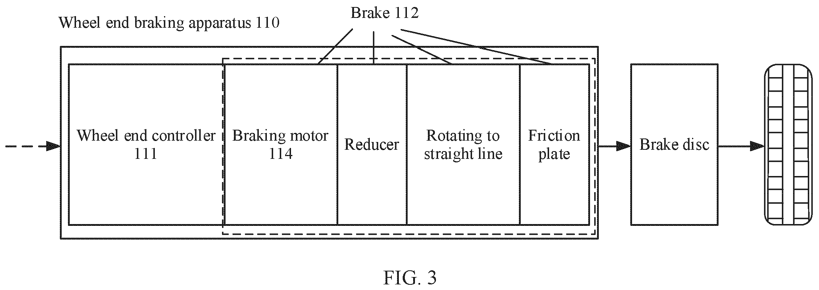

FIG. 3 is a diagram of a wheel end braking apparatus 110 according to an embodiment of this application. As shown in FIG. 3, the wheel end braking apparatus 110 includes a wheel end controller 111 and a braking unit 112. The braking unit includes a braking motor 113, a braking caliper, and a braking force sensor 114.

Specifically, as shown in FIG. 3, in a braking process of the electric vehicle 10, the wheel end controller 111 is configured to: receive a braking force distribution signal from the central controller 20 and output a drive current. The drive current is used to drive the braking motor 113 to output braking torque indicated by the braking force distribution signal. The braking motor 113 is configured to drive the braking caliper to clamp the brake disc, so that the braking caliper outputs braking force to the brake disc, and then the electric vehicle 10 generates a deceleration.

The central controller 20 is connected to the four wheel end braking apparatuses 110 via a controller area network (controller area network, CAN). The central controller 20 receives a braking instruction signal, a chassis CAN signal, a wheel speed, and other sensor signals, calculates a vehicle braking torque in real time by using a built-in algorithm, calculates braking force required by each wheel via a braking torque distribution module, transmits target braking force to the wheel end braking apparatus 110 via the CAN network, performs signal processing via the wheel end controller 111, transmits the target braking force to the braking motor, drives, via a reducer, the caliper to clamp the brake disc to complete a braking action, and finally measures an actual braking force value via the built-in braking force sensor of the wheel end braking apparatus 110 and returns the actual braking force value to the central controller 20 for negative feedback control.

In an embodiment, the electric vehicle 10 includes a drifting button. When the drifting button is off, the central controller 20 is configured to control the four wheel end braking apparatuses 110 to output the braking force indicated by the opening of the brake pedal. When the drifting button is on, the central controller 20 is configured to control the braking force output by the wheel end braking apparatuses 110 corresponding to the two rear wheels to be unequal to the braking force indicated by the opening of the brake pedal.

The drifting button may be disposed on the electric vehicle 10 for the driver to perform an operation. For example, the drifting button may be a physical button, and the driver may press the physical button to enable an automatic drifting mode of the electric vehicle 10, so that the central controller 20 starts automatic drifting control when detecting that the electric vehicle 10 meets conditions. For another example, the drifting button may be a virtual button on a central control screen, and the driver may select the automatic drifting mode to enable the automatic drifting mode of the electric vehicle 10. For another example, the drifting button may alternatively be indirectly disposed, for example, the drifting button may be combined with a button in a motion mode, or when the driver disables an ESP function button, the automatic drifting mode of the electric vehicle 10 is enabled by default.

When the drifting button is on, the electric vehicle 10 enters the automatic drifting mode, the ESP is disabled, and the central controller performs automatic drifting control when an input condition is met. The braking force output by the wheel end braking apparatuses corresponding to the two rear wheels is unequal to the braking force indicated by the opening of the brake pedal. When the drifting button is off, the ESP is normally enabled, and the central controller 20 performs braking control based on the opening of the brake pedal.

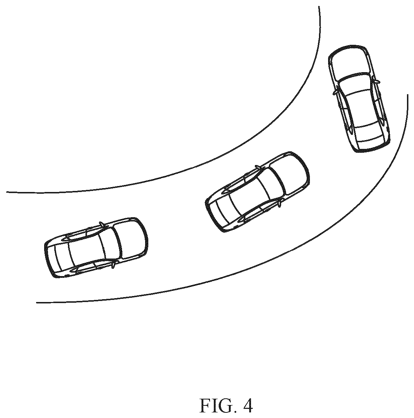

FIG. 4 is a diagram of a route when the electric vehicle 10 drifts according to this application.

In a drifting process, the rear wheels of the electric vehicle 10 lose or significantly reduce grip on a road surface, so that sideslip occurs, and a vehicle body steers at a large sideslip angle.

The following describes automatic drifting control performed by the braking system for the electric vehicle 10 according to this application.

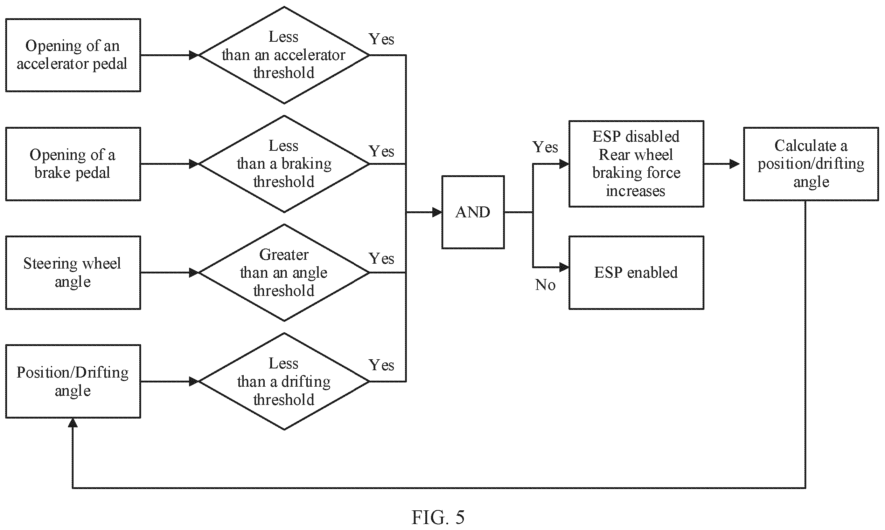

As shown in FIG. 5, in a traveling process in which a vehicle speed of the electric vehicle 10 is greater than a vehicle speed threshold, when an opening of the accelerator pedal of the electric vehicle 10 is less than an accelerator threshold, an opening of the brake pedal 120 of the electric vehicle 10 is less than a braking threshold, a rotation angle of the steering wheel of the electric vehicle 10 is greater than an angle threshold, and a steering angle of the electric vehicle 10 is less than a drifting threshold, the central controller 20 is configured to control wheel end braking apparatuses 110 corresponding to the rear wheels of the electric vehicle 10 to output braking force.

During the automatic drifting of the electric vehicle 10, the central controller 20 determines whether to enter a drifting control state based on information such as a pedal stroke, the rotation angle of the steering wheel angle, and a vehicle body position. When the opening of the accelerator pedal is less than the accelerator threshold, the opening of the brake pedal 120 is less than the braking threshold, and the rotation angle of the steering wheel is greater than the angle threshold, in other words, the driver does not step down the accelerator pedal and the brake pedal or a stepping amplitude is less than a specified range, and the driver rotates the steering wheel to a side to which the vehicle needs to turn, it may be considered that the driver expects to perform a drifting operation. If the steering angle of the electric vehicle 10 is less than the drifting threshold, the central controller 20 may enter the drifting control state, and control the braking force output by the wheel end braking apparatuses 110 corresponding to the two rear wheels to increase, to reduce grip of the rear wheels, so that the steering angle of the electric vehicle 10 increases, and the electric vehicle 10 implements the automatic drifting.

During the automatic drifting of the electric vehicle 10, the central controller 20 is configured to control the braking force output by the wheel end braking apparatuses 110 corresponding to the rear wheels to increase, so that the braking force output by the wheel end braking apparatuses 110 corresponding to the rear wheels is greater than braking force indicated by the opening of the brake pedal 120.

The opening of the brake pedal 120 may indicate a magnitude of braking force required by the driver. A larger opening of the brake pedal indicates a higher or more urgent requirement of the driver for braking, and larger corresponding required braking force. When the central controller 20 is not in automatic drifting control, the central controller 20 may determine, based on the opening of the brake pedal 120, the braking force that needs to be output by each wheel end braking apparatus 110, and separately indicate the braking force to each wheel end braking apparatus 110. A greater opening of the brake pedal 120 indicates greater braking force output by each wheel end braking apparatus 110. The braking force indicated by the central controller 20 changes with the opening of the brake pedal.

In a process in which the central controller 20 controls the electric vehicle 10 to automatically drift to one side, that is, the central controller 20 is in automatic drifting control, the braking force indicated by the central controller 20 is not determined based on the opening of the brake pedal. The braking force indicated by the central controller 20 does not change with the opening of the brake pedal. Because the opening of the brake pedal 120 is less than the braking threshold, the opening of the brake pedal 120 may remain unchanged. The braking force output by the wheel end braking apparatuses corresponding to the two rear wheels is indicated by the central controller 20 to increase. Therefore, in this case, the braking force output by the wheel end braking apparatuses 110 corresponding to the rear wheels is not equal to the braking force indicated by the opening of the brake pedal 120. Generally, the braking force output by the wheel end braking apparatuses corresponding to the rear wheels is greater than the braking force indicated by the opening of the brake pedal.

In a possible embodiment, the central controller 20 is configured to control the braking force output by the wheel end braking apparatuses 110 corresponding to the rear wheels to linearly increase to a target value at a preset change rate.

A manner in which the wheel end braking apparatuses 110 increases the braking force output to the rear wheels can also be indicated and controlled by the central controller 20. The change rate of braking force increase may be preset or may be calculated by the central controller 20 in real time. The preset change rate may be set to a larger value, so that the wheel end braking apparatuses 110 may increase the braking force output to the rear wheels in a stepped manner. The preset change rate may alternatively be a set fixed value, so that the braking force increases to the target value at a fixed slope. The preset change rate may alternatively be variable, and the braking force is adjusted according to a policy.

The target value increases with an increase of the rotation angle the steering wheel; or the target value increases with an increase of an attachment coefficient of a road surface in contact with the two rear wheels; or the target value increases with an increase of load of the two rear wheels.

The target value of the braking force output to the rear wheels directly affects the drifting angle and vehicle body control. When an angle at which the driver controls the steering wheel increases, it indicates that a larger angle of drifting is required, and therefore larger braking force needs to be output to the rear wheels. When the attachment coefficient of the road surface or the load of the rear wheels increases, friction between the rear wheels and the ground is greater. Therefore, to lose or reduce the grip between the rear wheels and the road surface, greater braking force needs to be applied to the rear wheels. On a wheel surface with a high or low attachment coefficient, the electric vehicle 10 needs different parameters to adapt the automatic drifting, and magnitudes of braking force applied to a wheel end are different.

In another possible embodiment, the central controller 20 is configured to control the braking force output by the wheel end braking apparatuses 110 corresponding to the two rear wheels to increase to a control range and fluctuate within the control range.

The central controller 20 can control the output braking force in a closed-loop manner, and adjust the target value or the control range of the braking force by detecting a slip ratio of the rear wheel. External characteristics of the braking force output by the wheel end braking apparatuses to the rear wheels can fluctuate back and forth within a control range.

In a possible embodiment, the central controller is further configured to: in a process of controlling the wheel end braking apparatuses corresponding to the two rear wheels to output the braking force, when the steering angle of the electric vehicle increases to be greater than or equal to the drifting threshold, control wheel end braking apparatuses corresponding to two wheels on a side opposite to a steering direction of the electric vehicle to output braking force.

Still refer to FIG. 5. In the process in which the central controller 20 controls the electric vehicle 10 to automatically drift to one side, the braking force output by the wheel end braking apparatuses 110 corresponding to the two rear wheels is controlled to increase, to reduce the grip of the rear wheels, so that the steering angle of the electric vehicle 10 increases. In this process, an electronic stability program ESP is disabled. The ESP can analyze driving status information of the electric vehicle 10 that is transmitted from sensors, to help the electric vehicle 10 maintain dynamic balance, and is configured to correct oversteer or understeer of the electric vehicle 10. In the drifting process, the electric vehicle 10 needs to appropriately oversteer. If the ESP is enabled, it is possible that a drifting action cannot be completed. Therefore, in the process in which the central controller 20 controls the electric vehicle to automatically drift to one side, the ESP needs to be disabled or does not participate in control of the braking system.

It should be understood that, in a drifting swerving process, an anti-lock braking system (anti-lock braking system, ABS), a cooperative regenerative braking system (cooperative regenerative braking system, CRB), a dynamic torque control (dynamic torque control, DTC), and electronic stability control (electronic stability control, ESC) all need to be disabled. The ABS system allows wheels to maintain traction force with a road surface during emergency braking, to prevent the wheels from being locked by periodically reducing and restoring braking force. The CRB combines conventional mechanical braking and regenerative braking technologies. During deceleration or braking, the system first uses regenerative braking to recover energy. When the regenerative braking reaches the limit, the mechanical braking intervenes to provide additional braking force. The DTC system monitors traction force of a vehicle and optimizes the traction force of the vehicle by adjusting an engine output and braking force, which helps reduce wheel slippage and improve stability and acceleration performance of the vehicle. The ESC system automatically adjusts braking force of wheels and an engine output, to help a driver maintain stability of a vehicle in a case of understeer or oversteer, and can prevent the vehicle from being out of control in a case of emergency avoidance or high-speed turning. Because the foregoing systems may reduce lock and slippage of rear wheels of a vehicle, the foregoing systems all need to be off to complete a drifting action.

However, when the steering angle of the electric vehicle 10 increases to a specified drifting threshold, the electric vehicle may complete the drifting process or lose stability in the drifting process. In this case, the central controller 20 may exit automatic drifting control, and normally respond to a change of the opening of the brake pedal. After the central controller exits automatic drifting control, the ESP is enabled again and participates in control on the electric vehicle 10. When the electric vehicle 10 oversteers, the braking force is applied to the outer wheels for steering, so that the vehicle body posture can be quickly restored to stability and the oversteer can be corrected.

The steering angle of the electric vehicle 10 may be obtained by a controller of the electric vehicle 10 via the sensors and the steering angle is sent to the central controller 20, or the central controller 20 may obtain the steering angle through calculation. A manner of obtaining the steering angle is not limited in this application.

The drifting threshold increases with an increase of the rotation angle of the steering wheel; or the drifting threshold is a fixed value.

The drifting angle of the electric vehicle 10 may be set by the driver. For example, the driver manually enters the drifting angle before the automatic drifting starts. The drifting angle may alternatively be calculated by using the rotation angle of the steering wheel. For example, a correspondence may be established between the rotation angle of the steering wheel and a drifting angle that the driver expects to obtain in the algorithm of the central controller 20. A larger rotation angle of the steering wheel indicates a larger target drifting angle that needs to be completed, and a smaller rotation angle of the steering wheel indicates a smaller drifting angle that needs to be completed. The drifting angle of the electric vehicle 10 may alternatively be calculated by using information such as the opening of the brake pedal.

In a possible embodiment, the central controller 20 is further configured to: in a process of controlling the wheel end braking apparatuses 110 corresponding to the rear wheels to output the braking force, when the opening of the brake pedal 120 or the opening of the accelerator pedal increases, or when the rotation angle of the steering wheel is less than or equal to the angle threshold, control the plurality of wheel end braking apparatuses 110 to output the braking force indicated by the opening of the brake pedal 120.

In the process in which the central controller 20 controls the electric vehicle 10 to automatically drift to one side, the driver may also end the automatic drifting in advance through an operation. For example, the driver may end the automatic drifting by stepping down the accelerator pedal, or the driver may end the automatic drifting by stepping down the brake pedal, or the driver may end the automatic drifting by rotating the steering wheel in a reverse direction. Therefore, when the central controller 20 detects that any one or more of the following conditions are met: the opening of the brake pedal changes, the opening of the accelerator pedal changes, and the rotation angle of the steering wheel is less than or equal to the angle threshold, the central controller 20 may end automatic drifting control, determine braking force again in response to an opening change of the brake pedal, and indicate the braking force to each wheel end braking apparatus 110.

The central controller 20 is configured to: in a process of controlling the wheel end braking apparatuses 110 corresponding to the rear wheels to output the braking force, when the vehicle speed of the electric vehicle is less than or equal to the vehicle speed threshold, control the plurality of wheel end braking apparatuses 110 to output the braking force indicated by the opening of the brake pedal.

The electric vehicle 10 needs to have a specific speed to perform the automatic drifting. The vehicle speed threshold is set to prevent the electric vehicle 10 from triggering automatic drifting control of the central controller 20 in a static state when the automatic drifting mode is enabled.

In a process in which the vehicle controller is configured to control the electric vehicle 10 to automatically drift to one side, the vehicle controller is configured to control torque output by a powertrain to be unequal to torque indicated by the opening of the accelerator pedal. When the steering angle of the electric vehicle 10 increases to be greater than or equal to the drifting threshold, or the opening of the brake pedal and/or the opening of the accelerator pedal change/changes, or the rotation angle of the steering wheel is less than or equal to the angle threshold, the powertrain is controlled to output the torque indicated by the opening of the accelerator pedal.

According to the solution of this application, when the electric vehicle 10 is in a non-steady state in a drifting process or when the drifting ends, for example, a required drifting angle or drifting position is reached, the braking force is applied to outer wheels, so that a vehicle body posture can be quickly restored to a steady state, to improve stability and safety of the vehicle. In this way, an operation of the driver is simpler and safer.

This application provides a braking control method for an electric vehicle 10.

The method may be applied to the foregoing braking system.

The control method includes: In a traveling process in which a vehicle speed of the electric vehicle 10 is greater than a vehicle speed threshold, when an opening of an accelerator pedal of the electric vehicle 10 is less than an accelerator threshold, an opening of a brake pedal 120 of the electric vehicle 10 is less than a braking threshold, a rotation angle of a steering wheel of the electric vehicle 10 is greater than an angle threshold, and a steering angle of the electric vehicle 10 is less than a drifting threshold, the braking system outputs braking force to rear wheels of the electric vehicle 10; and in a process in which the braking system outputs the braking force to the two rear wheels, when the steering angle of the electric vehicle 10 increases to be greater than or equal to the drifting threshold, the braking system outputs braking force to wheels on a side opposite to a steering direction of the electric vehicle 10.

The control method further includes: In a process in which the braking system is configured to output the braking force to the rear wheels of the electric vehicle 10, when the opening of the brake pedal 120 or the opening of the accelerator pedal increases, or when the rotation angle of the steering wheel is less than or equal to the angle threshold, the braking system outputs braking force indicated by the opening of the brake pedal 120 to the plurality of wheels.

That the braking system outputs the braking force to the rear wheels includes: linearly increasing the braking force output by the braking system to the rear wheels to a target value at a preset change rate, where the target value increases with an increase of the rotation angle of the steering wheel; or the target value increases with an increase of an attachment coefficient of a road surface in contact with the rear wheels; or the target value increases with an increase of load of the rear wheels.

The drifting threshold increases with an increase of the rotation angle of the steering wheel; or the drifting threshold is a fixed value.

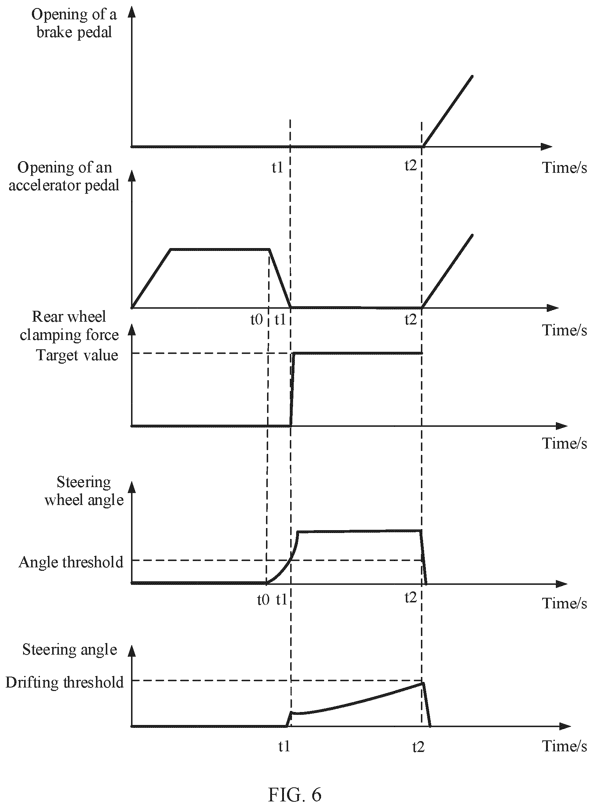

With reference to FIG. 6, the following describes a possible process in which the driver implements automatic drifting.

First, the driver presses the drifting button to enable the automatic drifting mode of the electric vehicle 10. The ESP is disabled, and the ABS, the CRB, the DTC, and the ESC are also disabled.

Then, the driver steps down the accelerator pedal to accelerate, and the vehicle controller controls the powertrain to output torque indicated by an opening of the accelerator pedal, so that the electric vehicle 10 accelerates to a speed higher than the vehicle speed threshold, and automatic drifting can be implemented.

Then, at a moment t0, the driver loosens the accelerator pedal, does not step down the brake pedal 120, and rotates the steering wheel to one side.

As shown in FIG. 6, at a moment t1, when an opening of the accelerator pedal of the electric vehicle is less than the accelerator threshold, an opening of the brake pedal is less than the braking threshold, a rotation angle of the steering wheel is greater than the angle threshold, and a steering angle of the electric vehicle 10 is less than the drifting threshold, the central controller 20 enters automatic drifting control. The central controller 20 is configured to control the braking force output by the wheel end braking apparatuses 110 corresponding to the two rear wheels to increase to a target value.

In a time period from t1 to t2, the electric vehicle 10 automatically drifts, and the steering angle gradually increases.

At a moment t2, the driver steps down the brake pedal or the accelerator pedal, or the driver reversely rotates the steering wheel until an angle is less than or equal to the angle threshold, or a vehicle steering angle is greater than or equal to the drifting threshold. In this case, the central controller 20 exits automatic drifting control. The ESP is enabled again and participates in control. The central controller 20 is configured to control braking force output by wheel end braking apparatuses 110 corresponding to two wheels on the other side of the electric vehicle to increase, so that a vehicle body posture quickly restores to a steady state and the control is stabilized.

After the moment t2, the central controller 20 responds to braking force indicated by the opening of the brake pedal again. The central controller 20 controls the four wheel end braking apparatuses 110 to output the braking force indicated by the brake pedal. The vehicle controller controls the powertrain to output torque indicated by the accelerator pedal.

It should be understood that a curve shown in FIG. 6 is merely an example, represents an approximate change trend, and does not represent a specific value.

According to the solution of this application, in a drifting cornering process, the drifting operation of the electric vehicle can be implemented after the driver performs only a simple operation, to reduce a drifting operation threshold for the driver, and improve driving experience of the vehicle.

A person of ordinary skill in the art may be aware that units and algorithm steps in the examples described based on embodiments disclosed in this specification can be implemented by electronic hardware or a combination of computer software and electronic hardware. Whether the functions are performed in a hardware or software manner depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

When the functions are implemented in the form of a software function unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes various media that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A braking system for an electric vehicle, wherein the braking system comprises a central controller and a plurality of wheel end braking apparatuses, the plurality of wheel end braking apparatuses are in a one-to-one correspondence with a plurality of wheels of the electric vehicle, the plurality of wheels comprise front wheels and rear wheels, and each wheel end braking apparatus is configured to output braking force to a brake disc of one of the wheels to brake the electric vehicle; and
the central controller is configured to:
in a traveling process in which a vehicle speed of the electric vehicle is greater than a vehicle speed threshold, when an opening of an accelerator pedal of the electric vehicle is less than an accelerator threshold, an opening of a brake pedal of the electric vehicle is less than a braking threshold, a rotation angle of a steering wheel of the electric vehicle is greater than an angle threshold, and a steering angle of the electric vehicle is less than a drifting threshold, control wheel end braking apparatuses corresponding to the rear wheels of the electric vehicle to output braking force.

2. The braking system according to claim 1, wherein that the central controller is configured to control the wheel end braking apparatuses corresponding to the rear wheels of the electric vehicle to output the braking force specifically comprises:
the central controller is configured to control the braking force output by the wheel end braking apparatuses corresponding to the rear wheels to increase, so that the braking force output by the wheel end braking apparatuses corresponding to the rear wheels is greater than braking force indicated by the opening of the brake pedal.

3. The braking system according to claim 1 or 2, wherein the central controller is further configured to:
in a process of controlling the wheel end braking apparatuses corresponding to the rear wheels to output the braking force, when the steering angle of the electric vehicle increases to be greater than or equal to the drifting threshold, control wheel end braking apparatuses corresponding to wheels on a side opposite to a steering direction of the electric vehicle to output braking force.

4. The braking system according to claim 1 or 2, wherein the central controller is further configured to:
in a process of controlling the wheel end braking apparatuses corresponding to the rear wheels to output the braking force, when the opening of the brake pedal or the opening of the accelerator pedal increases, or when the rotation angle of the steering wheel is less than or equal to the angle threshold, control the plurality of wheel end braking apparatuses to output the braking force indicated by the opening of the brake pedal.

5. The braking system according to claim 1, wherein the central controller is configured to:
in a process of controlling the wheel end braking apparatuses corresponding to the rear wheels to output the braking force, when the vehicle speed of the electric vehicle is less than or equal to the vehicle speed threshold, control the plurality of wheel end braking apparatuses to output braking force indicated by the opening of the brake pedal.

6. The braking system according to claim 1, wherein that the central controller is configured to control the wheel end braking apparatuses corresponding to the rear wheels to output the braking force comprises:
the central controller is configured to control the braking force output by the wheel end braking apparatuses corresponding to the rear wheels to linearly increase to a target value at a preset change rate.

7. The braking system according to claim 6, wherein the target value increases with an increase of the rotation angle of the steering wheel; or
the target value increases with an increase of an attachment coefficient of a road surface in contact with the rear wheels; or
the target value increases with an increase of load of the rear wheels.

8. The braking system according to claim 1, wherein the drifting threshold increases with an increase of the rotation angle of the steering wheel; or the drifting threshold is a fixed value.

9. A braking control method for an electric vehicle, wherein the electric vehicle comprises a braking system, the braking system is configured to output braking force to a plurality of wheels of the electric vehicle, and the control method comprises:
in a traveling process in which a vehicle speed of the electric vehicle is greater than a vehicle speed threshold, when an opening of an accelerator pedal of the electric vehicle is less than an accelerator threshold, an opening of a brake pedal of the electric vehicle is less than a braking threshold, a rotation angle of a steering wheel of the electric vehicle is greater than an angle threshold, and a steering angle of the electric vehicle is less than a drifting threshold, outputting, by the braking system, braking force to rear wheels of the electric vehicle; and
in a process in which the braking system outputs the braking force to the rear wheels, when the steering angle of the electric vehicle increases to be greater than or equal to the drifting threshold, outputting, by the braking system, braking force to wheels on a side opposite to a steering direction of the electric vehicle.

10. The control method according to claim 9, wherein the control method further comprises:
in a process in which the braking system is configured to output the braking force to the rear wheels of the electric vehicle, when the opening of the brake pedal or the opening of the accelerator pedal increases, or when the rotation angle of the steering wheel is less than or equal to the angle threshold, outputting, by the braking system, braking force indicated by the opening of the brake pedal to the plurality of wheels.

11. The control method according to claim 9, wherein outputting, by the braking system, the braking force to the rear wheels comprises:
linearly increasing the braking force output by the braking system to the rear wheels to a target value at a preset change rate, wherein
the target value increases with an increase of the rotation angle of the steering wheel; or the target value increases with an increase of an attachment coefficient of a road surface in contact with the rear wheels; or the target value increases with an increase of load of the rear wheels.

12. The control method according to claim 9, wherein the drifting threshold increases with an increase of the rotation angle of the steering wheel; or the drifting threshold is a fixed value.

13. An electric vehicle, wherein the electric vehicle comprises the braking system according to any one of claims 1 to 8, a drive system, an accelerator pedal, a brake pedal, and a steering wheel, the accelerator pedal is configured to instruct the drive system to output driving force to wheels of the electric vehicle, and the brake pedal is configured to instruct the braking system to output braking force to a plurality of wheels of the electric vehicle.

14. The electric vehicle according to claim 13, wherein the electric vehicle further comprises an electronic stability control system, and the electronic stability control system is disabled in a process in which the braking system is configured to output braking force to rear wheels of the electric vehicle.
